# EUROPÄISCHE PATENTANMELDUNG

(11) **EP 0 526 709 A1**
(43) Veröffentlichungstag der Anmeldung: **10.02.1993**
(21) Anmeldenummer: 92109466.0
(22) Anmeldetag: 04.06.1992
(51) Int. Cl.: B29D 12/02, G02C 13/00

(54) **Brillenfassung**

(30) Priorität: 04.06.1991 DE 4118335
(71) Anmelder: OPTIK PARTNER AG & CO., D-73529 Schwäbisch Gmünd (DE)
(72) Erfinder: Schwaigert, Bernd, W-7130 Mühlacker (DE)
(74) Vertreter: Baronetzky, Klaus, Dipl.-Ing.

(57) **Zusammenfassung**

Bei einer Brillenfasssung (10) aus verformbarem, insbesondere aus thermoplastischem Material weist ein durch Unterdruckverformung spanlos verformter Nasenbrückenbereich (20) eine der Nasenkrümmung nachempfundene Krümmung auf.

## Beschreibung

Die Erfindung betrifft eine Brillenfassung gemäß dem Oberbegriff von Anspruch 1, ein Verfahren zur Herstellung einer Brillenfassung gemäß dem Oberbegriff von Anspruch 4 sowie eine hierfür geeignete Formungsvorrichtung, gemäß dem Oberbegriff von Anspruch 11.

Zur Herstellung von Brillenfassungen ist es bekannt, die Verformung des Nasenbrückenbereichs der zu erstellenden Brillenfassung aus Kunststoff dadurch zu fertigen, daß die vorgefräste Brillenfassung in ein Gesenk eingesetzt wird. Die Brillenfassung wird hierbei in geeigneter Weise erwärmt, und die Erstellung der gewünschten Krümmung des Brückenbereichs, die auch als Brückenkröpfung bezeichnet wird, erfolgt durch eine entsprechende mechanische Verformung in dem Gesenk. Die Herstellung einer derartigen Brillenfassung läßt sich beispielsweise der FR-OS 22 19 831 entnehmen. Nachteilig hierbei ist es, daß im Glasnutenbereich aufgrund der Verformung in dem Gesenk häufig Beschädigungen oder Formveränderungen der Innenform entstehen. Diese müssen entweder in Kauf genommen werden oder gegebenenfalls in einem relativ aufwendigen Verfahren über eine Nachbearbeitung korrigiert werden.

Diese Nachteile lassen sich bei der aus der DE-OS 23 30 108 bekannten Brillenfassung vermeiden. Bei dieser Lösung wird zunächst ein plattenförmiger Rohling, der beispielsweise aus Celluloseacetat besteht und aus welchem der Mittelteil der Brillenfassung hergestellt werden soll, in eine bestimmte Form gebracht, die der erwünschten Krümmung im Bereich der Nase, sowie gegebenenfalls der gewünschten Meniskatur, nachempfunden ist. Sodann erfolgt die spanabhebende Verformung durch die üblichen Fräsarbeiten.

Zur Erstellung dieser Brillenfassung wird eine Kombination einer Patrize und einer Matrize miteinander verwendet, die jedoch aus verschiedenen Gründen nachteilig ist.

Zum einen führt das Pressen der Brillenfassung zu einer Materialverdrängung, insbesondere, wenn der Preßhub nicht exakt auf die Stärke des Rohlings abgestimmt ist.

In der Praxis ist die Materialstärke der Fräsrohlinge sehr schwankend, so daß es für die Herstellung einer qualitativ hochwertigen Brillenfassung erforderlich ist, vor jedem Preßvorgang zunächst die Stärke des Rohlings zu bestimmen und den Preßhub sehr genau darauf einzujustieren.

Andererseits führt die Verformung aufgrund der zähelastischen Eigenschaften des dort erwärmten Materials auch zu Verformungen an den Rändern des Rohlings. Zwar werden diese Verformungen bei der späteren Fräsbearbeitung vollständig entfernt. Sie sind jedoch nachteilig, wenn die Fräsbearbeitung durch eine vollautomatische CNC-Fräsmaschine durchgeführt werden soll. In diesem Falle können nicht nur während der Magazinierung zur reibungsfreien Zuführung der Rohlinge zu der Fräsmaschine Schwierigkeiten auftreten. Auch beim vollautomatischen Einsetzen und Fixieren in der Fräsmaschine ergibt sich das Problem, daß derartige Materialveränderungen und Aufwerfungen das häufig über entsprechende Anschläge bereitgestellte Bezugssystem beeinträchtigen können, so daß die von der Fräsmaschine geleisteten Fräsarbeiten nicht ganz dem gewünschten Ergebnis entsprechen.

Demgegenüber liegt der Erfindung die Aufgabe zugrunde, eine Brillenfassung gemäß dem Oberbegriff von Anspruch 1, ein Verfahren zur Herstellung einer Brillenfassung gemäß dem Oberbegriff von Anspruch 4 und/oder eine Formungsvorrichtung für eine Brillenfassung gemäß dem Oberbegriff von Anspruch 11 zu schaffen, die eine Qualitätssteigerung mit einer verbesserten Anpassung an eine vollautomatische Fräsmaschine verbinden, ohne daß eine nennenswerte Kostensteigerung hierbei zu Buche schlagen würde.

Diese Aufgabe wird erfindungsgemäß durch die Ansprüche 1, 4 bzw. 11 gelöst. Vorteilhafte Weiterbildungen ergeben sich aus den Unteransprüchen.

Bei der erfindungsgemäßen Brillenfassung ist es zunächst von Vorteil, daß aufgrund der Verzichts auf eine Pressung keine Materialverdichtung stattfinden kann. Aufgrund der zähelastischen Eigenschaften des verformbaren erwärmten Materials wie Celluloseacetat erfolgt durch die erfindungsgemäße Unterdruckverformung aber auch nicht das Gegenteil hierzu, also eine entsprechende Ausdünnung des Materials, Verwerfungen, Brillen oder Blasenbildungen od. dgl.

Besonders günstig ist es, daß aufgrund der Unterdruckverformung die Stärke des Rohlings vergleichsweise stark schwanken darf, ohne die gleichbleibende Qualität der Verformung zu gefährden. In diesem Zusammenhang hat es sich als günstig herausgestellt, wenn zusätzlich zur Unterdruckverformung in eine Matrizenform hinein eine Patrize mit einem Stempel vorgesehen ist, der jedoch zum einen für alle unterschiedlichen gewünschten Nasenbrückenformen gleichbleibend ausgebildet sein kann, und zum anderen auch leicht federbelastet geführt sein kann, so daß über den Federweg die Schwankungsbreite der Materialstärke des Rohlings ausgleichbar ist.

Besonders günstig ist es hierbei, wenn die an dem Stempel ausgeübte Kraft erheblich geringer oder zumindest höchstens gleich groß der von der Matrize ausgeübten Saugverformungskraft ist. In diesem Falle entstehen keine Überdruckzonen während der Verformung, so daß trotz der Verwendung der Patrize unerwünschte Verwerfungen vermieden werden können. Dennoch wird die spanlose Verformung unterstützt, so daß mit einem etwas verminderten Unterdruck gearbeitet werden kann.

Besonders günstig ist es ferner, wenn zur weiteren Verbesserung der Formtreue lediglich ein mittlerer Bereich des Rohlings erwärmt wird. In diesem Falle verbleiben bei der Unterdruckverformung an den Außenrändern des Rohlings unverformte Bereiche, die die exakte Maßhaltigkeit der Rohlinge auch nach der erfindungsgemäßen Unterdruckverformung gewährleisten.

Es versteht sich, daß der Bereich der Erwärmung in weiten Bereichen den Erfordernissen angepaßt werden kann. Bei dem für die Herstellung von Kunststoff-Brillenfassungen häufig verwendente Celluloseacetat ist es möglich, lediglich einen im wesentlichen rechteckigen Bereich der Matrize zu erwärmen, der jedenfalls den Nasenbrückenbereich überdeckt und sich seitlich noch ein Stück darüber hinaus erstreckt.

Gemäß einer weiteren vorteilhaften Ausgestaltung ist es vorgesehen, den als Patrize verwendeten Stempel zu kühlen, wodurch nicht nur die Kühlung der Randbereiche des Rohlings begünstigt wird, sondern auch eine schnellere Erstarrung des verformten Nasenbrückenbereichs sichergestellt werden kann, und somit die Zykluszeit noch etwas vermindert werden kann.

Gemäß einer weiteren vorteilhaften Ausgestaltung ist es vorgesehen, die in der Matrize vorgesehene Form für die Unterdruckverformung so auszugestalten, daß sie achsensymmetrisch sowohl hinsichtlich der Längs- als auch der Querachse des Rohlings verläuft. Hierdurch erfolgen die Materialverschiebungen ebenfalls symmetrisch, so daß kein Grobverziehen des Rohlings auftritt.

Die für die Bereitstellung des erforderlichen Unterdrucks nötigen Saugöffnungen können vorzugsweise außerhalb der eigentlichen, bei der Fräsverarbeitung verbleibenden Nasenbrücke vorgesehen sein, so daß sie während der Fräsarbeiten vollständig entfernt werden.

Eine weitere günstige Maßnahme zur Vermeidung jeglichen Verziehens besteht darin, daß der Rohling seitlich des Erwärmungsbereichs und dementsprechend erheblich des Nasenbrückenbereichs fest auf eine ebene Fläche gepreßt und somit dort arretiert wird. Hierzu kann eine entsprechende Ausgestaltung sowohl der Matrize als auch der Patrize mit ebenen Seitenflächen günstig sein.

Die erfindungsgemäße Unterdruckverformung ermöglicht die Erstellung der gewünschten Brükkenkröpfung auch dann, wenn bereits Nasenauflagen aufgebracht oder gegebenenfalls aufgespritzt sind, die zur integralen Ausarbeitung der Nasenauflagen dienen. Aufgrund der Unterdruckverformung ist ein freier Zugang des Stempels von hinten auf den Brückenbereich nicht erforderlich. Vielmehr ist lediglich ein leichter Druck mittig in den Brückenbereich hinein günstig, wie vorstehend ausgeführt.

Weitere Vorteile, Einzelheiten und Merkmale der Erfindung ergeben sich aus der nachstehenden Beschreibung eines Ausführungsbeispiels anhand der Zeichnung.

Es zeigen:
Fig. 1 eine schematisierte Ansicht einer für die Erstellung der erfindungsgemäßen Brillenfassung bestimmten Matrize sowie gestrichelt angedeutet die Brillenfassung in einer Ausführungsform der Erfindung;
Fig. 2 einen Schnitt durch einen Einsatz der Matrize gemäß Fig. 1;
Fig. 3 eine Vorderansicht des Einsatzes gemäß Fig. 2;
Fig. 4 eine Ansicht einer Patrize in einer Ausführungsform einer erfindungsgemäßen Formungsvorrichtung in der Darstellung von unten;
Fig. 5 eine Seitenansicht der Patrize gemäß Fig. 4;
Fig. 6 einen Schnitt durch eine bereits spanlos verformte und für die Fräsarbeiten bereitstehende Platte zur Erstellung einer erfindungsgemäßen Brillenfassung; und
Fig. 7 eine Draufsicht auf die Platte gemäß Fig. 6.

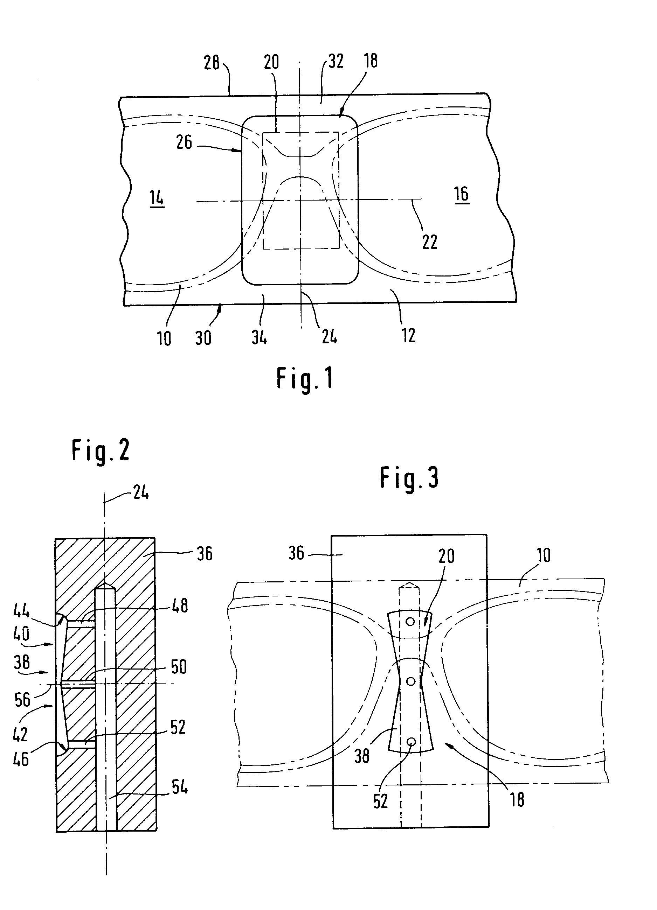

Eine erfindungsgemäße Brillenfassung 10 ist in Fig. 1 gestrichelt und teilweise dargestellt; die Darstellung soll die Zuordnung zu einer für die Herstellung der erfindungsgemäßen Brillenfassung 10 verwendeten Matrize 12 wiedergeben.

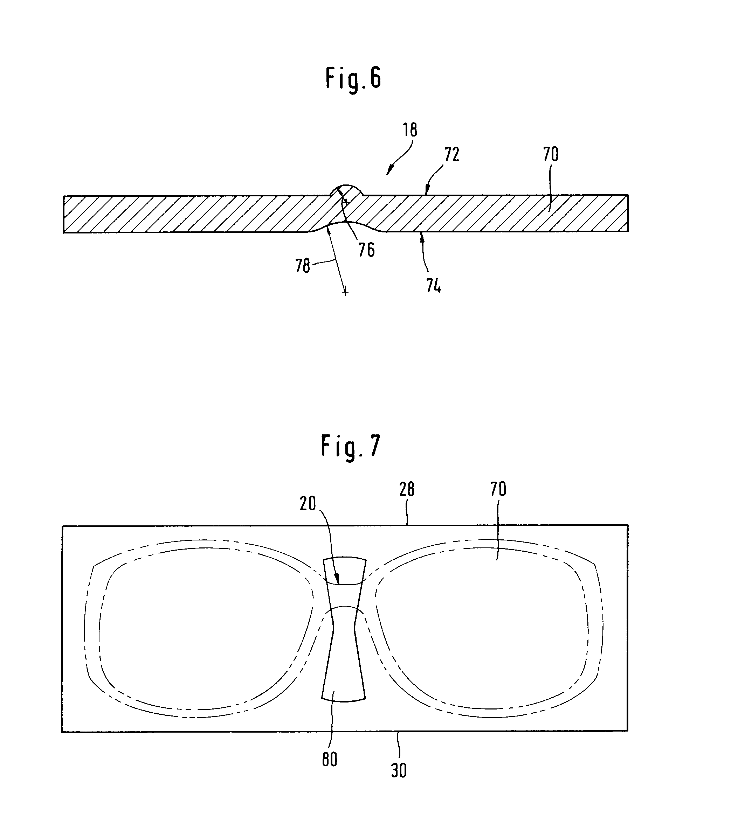

Die Matrize 12 ist in dem dargestellten Ausführungsbeispiel als massive Stahlplatte mit je flachen Seitenbereichen 14 und 16 ausgebildet. Die Seitenbereiche 14 und 16 sind hierbei bevorzugt so ausgestaltet, daß sie eine gute Haftung bei entsprechender Pressung eines in Fig. 6 dargestellten Rohlings an diesen Stellen auf die Matrize 12 ermöglicht, was eine Stabilisierung des Rohlings gegen ein Verziehen begünstigt.

Ein Brückenbereich 18 ist zwischen den Seitenbereichen 14 und 16 vorgesehen und in Fig. 1 gestrichelt dargestellt. In diesem Bereich ist die Ausbildung der gekröpften Nasenbrücke 20 der Brillenfassung 10 vorgesehen. Wie aus Fig. 1 ersichtlich ist, schneidet eine Längsachse 22 der Matrize 12 und eine Querachse 24 der Matrize 12 den Brückenbereich 18, während die spätere Nasenbrücke 20 außerhalb des Bereichs der Längsachse 22 vorgesehen ist und die Querachse 24 auch die Nasenbrücke 20 schneidet.

Den Brückenbereich 18 überdeckend ist ein Erwärmungsbereich 26 in Fig. 1 mit einer durchgezogenen Linie dargestellt. Die Matrize 12 weist an dieser Stelle eine Heizeinrichtung auf, die so ausgestaltet ist, daß die Erwärmung des Rohlings im wesentlichen auf den Bereich 26 konzentriert bleibt. Der Erwärmungsbereich 26 erstreckt sich in Querrichtung, d.h., in Richtung der Querachse 24, ebenfalls über den Brückenbereich 18 hinaus, jedoch nicht bis zu Querrändern 28 und 30 der Matrize 12 und des entsprechenden Rohlings (vgl. Fig. 7). Damit beläßt der Erwärmungsbereich 26 je noch eine Randzone 32 und 34 zu den Querrändern 28 und 30 hin, die nicht erwärmt wird. Aufgrund der vergleichsweise schlechten Wärmeleitungseigenschaften des für den Rohling verwendeten Celluloseacetats ist eine räumliche Begrenzung des Erwärmungsbereichs 26 im wesentlichen auf den Nasenbrückenbereich 18 vergleichsweise gut möglich.

In der Matrize 12 ist ein Einsatz 36 vorgesehen, der in Fig. 3 im Schnitt dargestellt ist. Der Einsatz 36 dient hierbei in dem dargestellten Ausführungsbeispiel als formgebender Körper für den Brückenbereich 18 (Fig. 1) und weist hierzu eine im Schnitt dargestellte Matrizenform 38 auf, die der Draufsicht gemäß Fig. 3 ebenfalls zu entnehmen ist. Die Matrizenform 38 besteht aus zwei zusammenhängenden, je konisch zu den Querrändern 28 und 30 sich vertiefenden Ausnehmungen 40 und 42, die randseitig je in einer Ausrundung 44 bzw. 46 münden. Die Matrizenform 38 ist an Saugöffnungen angeschlossen, wobei in dem dargestellten Ausführungsbeispiel drei Saugöffnungen 48, 50 und 52 vorgesehen sind. Die Saugöffnungen 48 bis 52 sind als Bohrungen ausgebildet und verlaufen zwischen der Matrizenform 38 und einem Saugkanal 54, der an einem Unterdruckanschluß angeschlossen ist, der eine ausreichende Saugreserve aufweist.

Die Neigung des Konus der Ausnehmung 40 ist an die entsprechende Neigung der Vorderseite der Nasenbrücke 20 der Brillenfassung 10 angepaßt. In dem dargestellten Ausführungsbeispiel ist die Ausnehmung 40 entsprechend einer Sekante durch einen Kegelstumpf ausgeführt. Es versteht sich jedoch, daß hier in beiden Bereichen eine Anpassung an die gewünschte Form der Nasenbrücke erfolgen kann, wobei auch eine auch in der Querrichtung ausgerundete Ausgestaltung in Betracht kommt.

Die Ausnehmung 42 erstreckt sich symmetrisch zu der Ausnehmung 40, bezogen auf eine Querachse 56, die sich je senkrecht zu der Querachse 24 sowie zu der Längsachse 22 erstreckt.

Durch die symmetrische Ausbildung der Matrizenform 38 wird eine ungleichförmige Kraftbeaufschlagung des Rohlings bei der Erzeugung der Brückenkröpfung vermieden, so daß auch in dieser Hinsicht keine Verformung zu erwarten ist.

Bei der Beaufschlagung des Saugkanals 54 mit Saug-Unterdruck und gleichzeitiger Erwärmung des Erwärmungsbereichs 26 (Fig. 1) mag sich die Rohlingsplatte (Fig. 6) soweit in den Bereich der Matrizenform 38 hin verformen, daß ein Teil des Plattenmaterials zapfenförmig in die Saugöffnungen 48, 50 und 52 hineingerät. Dies ist jedoch solange unschädlich, wie hierdurch kein Verstopfen der Saugöffnungen 48 bis 52 erfolgt. Wie aus Fig. 3 besser ersicht ist, erstrecken sich nämlich die Saugöffnungen 48 bis 52 je außerhalb des Bereichs der eigentlichen Nasenbrücke 20, so daß der dort vorliegende Brückenbereich 18 ohnehin während der Fräsarbeiten zusammen mit den etwaigen Saugzapfen vollständig entfernt wird.

Der in Fig. 3 dargestellte Einsatz 36, der in der Matrize 12 eingesetzt ist, bietet den Vorteil, daß bei einer anderen gewünschten Kontur der Nasenbrükke 20 nicht die gesamte Matrize 12 ausgetauscht werden muß, sondern lediglich der aus einem quaderförmigen Stahlblock geformte Einsatz 36.

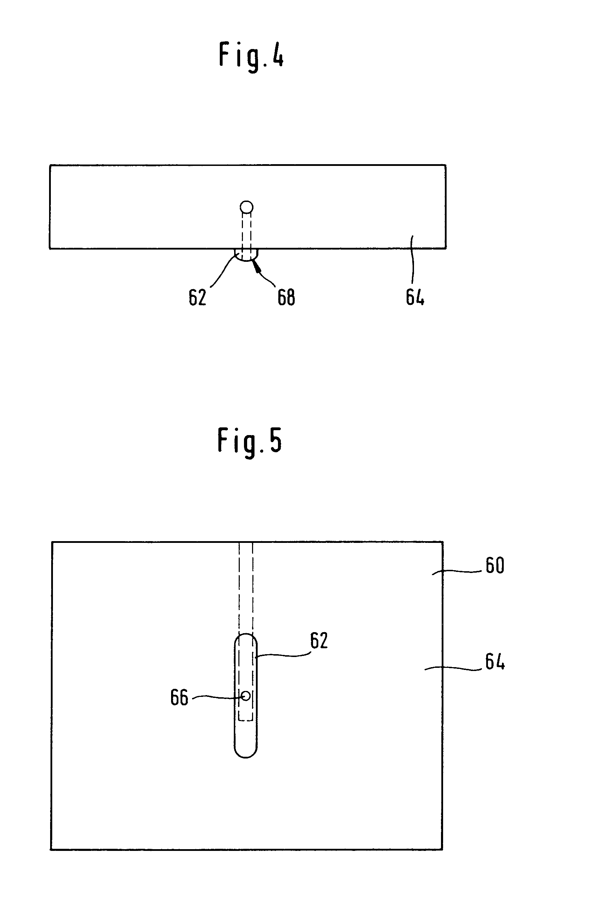

Aus Fig. 4 ist ersichtlich, daß für die Druckbeaufschlagung des Rückenbereichs 18 während der Verformung eine sehr einfach gehaltene Patrize 60 verwendet werden kann. Die Patrize 60 weist einen Stempel 62 auf, der schmaler als die Nasenbrücke 20 ist. Der Stempel 62 springt aus einer Grundplatte 64 der Patrize 60 nur um weniges vor. Die Grundplatte 64 ist großflächig ausgebildet und dient zugleich der Kühlung, auch der Seitenbereiche 14 und 16 (Fig. 1).

Zusätzlich ist der Stempel 62 mit einer Kühlluftbohrung 66 versehen, die eine Kühlung des Rückenbereichs 18 unmittelbar nach Fertigstellung der gewünschten Abkröpfung erlaubt. Auch wenn die Kühlluftbohrung in Fig. 4 in einer einfachen Ausgestaltung dargestellt ist, versteht es sich, daß die Kühlluft zunächst intensiv durch die Grundplatte 64 zu deren Kühlung geleitet werden kann, bevor sie an der Kühlluftbohrung 66 austritt.

Zur weiteren Verbesserung der Wärmeableitung kann es vorgesehen sein, daß die Patrize 60 aus Aluminium besteht. Zudem ist es nicht erforderlich, daß der Stempel 62 für verschiedene Ausgestaltungen der Nasenbrücke unterschiedlich ausgebildet ist. Wie bereits erläutert, dient die Druckbeaufschlagung des Brückenbereichs 18 lediglich der Unterstützung der Unterdruckverformung, insbesondere während des Beginns der Verformung, währen der größte Teil der Verformungskraft durch die Saugleistung im Saugkanal 54 bereitgestellt wird.

Aus Fig. 5 ist der Stempel 62 in der Seitenansicht ersichtlich. Er läuft in einer balligen Endfläche 68 aus, so daß eine universelle Verwendbarkeit des Stempels 62 gegeben ist.

Auch wenn in den Figuren 4 und 5 lediglich eine Kühlluftbohrung 66 dargestellt ist, versteht es sich, daß zur gleichmäßigeren Beaufschlagung des Brückenbereichs 18 (Fig. 1) mit Kühlluft auch eine Mehrzahl von Kühlluftbohrungen vorgesehen sein kann, um gewünschtenfalls eine Art Kühlluftvorhang bereitzustellen und eine punktförmige Kühlung und damit etwaige induzierte Spannungen in dem Material zu vermeiden.

Aus Fig. 6 ist ein Rohling 70 ersichtlich, der plattenförmig ausgebildet ist und bereits der erfindungsgemäßen Unterdruckformung unterworfen worden ist. Bei dem im Schnitt dargestellten Rohling 70 gemäß Fig. 6 wurden die noch erforderlichen Fräsarbeiten, um die Brillenfassung 10 herzustellen (Fig. 1, Fig. 7), noch nicht durchgeführt. Wie aus Fig. 6 ersichtlich ist, weist die Platte oder der Rohling 70 eine bereits der endgültigen Form nachempfundene Krümmung der Nasenbrücke auf, wobei zur Brillenvorderseite 72 hin eine konvexe, zur Brillenrückseite 74 hin hingegen eine konkave Ausgestaltung vorliegt.

Entsprechend dem erzielten Verformungsergebnis per Unterdruckverformung ist ein Krümmungsradius 76 an der Brillenvorderseite 72 im Brückenbereich 18 kleiner als ein Krümmungsradius der Brückenbereichs 18 an der Brillenrückseite 74. Die neutrale Faser verläuft hierbei etwa mittig zwischen diesen Krümmungsradien 76 und 78, so daß keine erhöhten Materialbelastungen, Scherspannungen u. dgl. vorliegen. Hierbei kommt besonders das günstige zähviskose Fließverhalten von Celluloseacetat bei der Erwärmung zu Tragen.

Aus Fig. 7 ist die somit fertiggestellte Rohling-Platte 70 in der Draufsicht ersichtlich. Der Brückenbereich 18 ist hierbei als erhaben ausgeprägte Kontur 80 zu sehen, deren Krümmung im Bereich der Nasenbrücke 20 an die gewünschte Krümmung dieser an der Brillenvorderseite 72 (Fig. 6) angepaßt ist. Durch die erfindungsgemäß vorteilhaften Merkmale ist sichergestellt, daß im Bereich der Querränder 28 und 30 kein Material herausgequetscht wurde, so daß die Platte 70 sich sehr gut für die Weiterbearbeitung eignet.

## Patentansprüche

1. Brillenfasssung aus verformbarem, insbesondere aus thermoplastischem Material, mit einem Nasenbrückenbereich, der insbesondere spanlos derart verformt ist, daß er eine der Nasenkrümmung nachempfundene Krümmung aufweist, dadurch gekennzeichnet, daß die spanlose Verformung eine Unterdruckverformung ist.

2. Brillenfassung nach Anspruch 1, dadurch gekennzeichnet, daß die Unterdruckverformung an der Brillenvorderseite unter Erwärmung des Materials vorgesehen ist.

3. Brillenfassung nach Anspruch 1 oder 2, dadurch gekennzeichnet, daß zusätzlich eine mechanische Biegeverformung des Nasenbrükkenbereichs (18) an der Brillenrückseite (74) vorgesehen ist.

4. Verfahren zur Herstellung einer Brillenfassung aus einem verformbaren, insbesondere thermoplastischen Material, wobei ein Rohling (70) in einem Nasenbrückenbereich (18) spanlos verformt wird, wobei mit der spanlosen Verformung eine der Nasenkrümmung nachempfundene Krümmung erreichbar ist, dadurch gekennzeichnet, daß der Nasenbrückenbereich über einen dort anliegenden Unterdruck verformt wird.

5. Verfahren nach Anspruch 4, dadurch gekennzeichnet, daß der Nasenbrückenbereich und unmittelbar an diesen anschließende Bereiche während der spanlosen Verformung erwärmt wird.

6. Verfahren nach einem der Ansprüche 4 oder 5, dadurch gekennzeichnet, daß für die Unterdruckverformung eine Matrize eingesetzt wird, die Saugöffnungen aufweist, die außerhalb der später verbleibenden Nasenbrücke angeordnet sind.

7. Verfahren nach einem der Ansprüche 4 bis 6, dadurch gekennzeichnet, daß eine plattenförmiger Rohling im Nasenbrückenbereich erwärmt wird, wobei eine Randzone des Rohlings im Nasenbrückenbereich kalt bleibt, die Unterdruckverformung durchgeführt wird und nach Abkühlung des Nasenbrückenbereichs die spanabhebenden Verformungsschritte durchgeführt werden.

8. Verfahren nach einem der Ansprüch 4 bis 7, dadurch gekennzeichnet, daß zusammen mit der Unterdruckverformung des Nasenbrückenbereichs über eine Patrize der Nasenbrückenbereich auch mechanisch verformt wird, wobei die durch die Patrize eingeleitete Verformungsenergie höchstens gleich groß der Verformungsenergie der Unterdruckverformung ist.

9. Verfahren nach einem der Ansprüche 4 bis 8, dadurch gekennzeichnet, daß eine Matrize zur Erzeugung der Unterdruckverformung eine Form aufweist, die bezogen auf eine Längsachse eines Rohlings zur Herstellung der Brillenfassung achsensymmetrisch ausgebildet ist.

10. Verfahren nach einem der Ansprüche 4 bis 9, dadurch gekennzeichnet, daß eine Form einer Matrize zur Unterdruckverformung bei Abschluß der Unterdruckverformung durch das Material des Rohlings im wesentlichen vollständig ausgefüllt wird.

11. Formungsvorrichtung zur Herstellung einer Brillenfassung aus verformbarem, insbesondere aus thermoplastischem Material, mit einer Matrize, die für die Aufnahme eines Nasenbrückenbereichs ausgelegt ist, der über eine spanlose Verformung eines Rohlings ausgebildet wird, dadurch gekennzeichnet, daß die Matrize (12) Saugöffnungen (48, 50, 52) aufweist.

12. Formungsvorrichtung nach Anspruch 11, dadurch gekennzeichnet, daß eine Mehrzahl von Saugöffnungen (48, 50, 52) in einer Matrizenform (38) vorgesehen sind, die außerhalb des Bereichs der späteren Nasenbrücke angeordnet sind.

13. Formungsvorrichtung nach Anspruch 11 oder 12, dadurch gekennzeichnet, daß zusätzlich zu der Matrize (12) eine Patrize (60) vorgesehen ist, die einen Stempel (62) aufweist, der für die Ausübung eines Drucks auf den Rohling (70) im Nasenbrückenbereich (18) ausgelegt und insbesondere federbelastet ist.

14. Formungsvorrichtung nach einem der Ansprüche 11 oder 12, dadurch gekennzeichnet, daß die Matrize (12) je nach gewünschter Ausbildung der Nasenbrücke austauschbar ausgebildet ist und eine einheitliche Patrize (60) unabhängig von der gewünschten Brückenform eingesetzt ist.

15. Formungsvorrichtung nach einem der Ansprüche 11 bis 14, dadurch gekennzeichnet, daß die Form (38) der Matrize (12) der Vorderseite der Nasenbrücke an der Brillenfassung (10) angenähert ist und insbesondere konisch ausgebildet ist.

16. Formungsvorrichtung nach einem der Ansprüche 11 bis 15, dadurch gekennzeichnet, daß die Matrizenform (38) symmetrisch ausgebildet ist.

17. Formungsvorrichtung nach einem der Ansprüche 11 bis 16, dadurch gekennzeichnet, daß die Matrizenform (38) in der Symmetrieebene der Matrize (12) eine geringere Tiefe und zu den Außenrändern (28, 30) der Matrize (12) hin eine zunehmende Tiefe aufweist.

18. Formungsvorrichtung nach einem der Ansprüche 11 bis 17, dadurch gekennzeichnet, daß die Matrize (12) eine Heizeinrichtung aufweist, die den Bereich (20) der Nasenbrücke überlappt, einen Randstreifen (32; 34) eines zu verformenden Rohlings (70) jedoch freiläßt.

19. Formungsvorrichtung nach einem der Ansprüche 11 bis 18, dadurch gekennzeichnet, daß in einer Patrize (60) mindestens eine Druckluftbohrung (66) für eine Kühlung des verformten Rohlings (70) ausgebildet ist.
